**Europäisches Patentamt**

**European Patent Office**

**Office européen des brevets**

(19)

(11) Veröffentlichungsnummer : **0 196 489**
**B1**

(12) **EUROPÄISCHE PATENTSCHRIFT**

(45) Veröffentlichungstag der Patentschrift :
11.01.89

(51) Int. Cl.⁴ : **F 16 L   1/02**, B 25 B  27/10

(21) Anmeldenummer : 86102925.4

(22) Anmeldetag : 05.03.86

(54) **Vorrichtung zum Zusammenstecken zweier Rohre.**

(30) Priorität : 16.03.85 DE 3509510
27.03.85 DE 3511041

(43) Veröffentlichungstag der Anmeldung :
08.10.86 Patentblatt 86/41

(45) Bekanntmachung des Hinweises auf die Patenterteilung : 11.01.89 Patentblatt 89/02

(84) Benannte Vertragsstaaten :
AT BE CH FR GB IT LI LU NL SE

(56) Entgegenhaltungen :
CH–A–   505 333
DE–A– 3 245 674
US–A– 3 571 896

(73) Patentinhaber : **Minkmar, Gunther**
**Talstrasse 12**
**D-7327 Adelberg (DE)**

**Bührle, Jürgen**
**Georg-Moll-Weg 6**
**D-7348 Gruibingen (DE)**

**Bührle, Erich**
**Salacherstrasse 116**
**D-7332 Eislingen (DE)**

(72) Erfinder : **Minkmar, Gunther**
**Talstrasse 12**
**D-7327 Adelberg (DE)**
Erfinder : **Bührle, Jürgen**
**Georg-Moll-Weg 6**
**D-7348 Gruibingen (DE)**
Erfinder : **Bührle, Erich**
**Salacherstrasse 116**
**D-7332 Eislingen (DE)**

(74) Vertreter : **Reimold, Otto, Dr. Dipl.-Phys. et al**
**Patentanwälte Dipl.-Ing. R. Magenbauer Dipl.-Phys.**
**Dr. O. Reimold Dipl.-Phys.Dr. H. Vetter Hölderlinweg 58**
**D-7300 Esslingen (DE)**

**Beschreibung**

Die Erfindung betrifft eine Vorrichtung zum Zusammenstecken zweier Rohre, wobei das zu verbindende Ende des ersten Rohres von einer im Durchmesser größeren Muffe gebildet wird, in die das zugewandte Ende des zweiten Rohres einsteckbar ist, mit einer auf das erste Rohr hinter der Muffe aufsetzbaren Abstützeinrichtung, einer das zweite Rohr von aussen her spannenden Spanneinrichtung und mit einer an der Abstützeinrichtung angeordneten sowie mit der Spanneinrichtung in Eingriff stehenden Zieheinrichtung, bei deren Betätigung die Spanneinrichtung das zweite Rohr erfaßt und gegen das erste Rohr zieht, wobei sich die Abstützeinrichtung an der Muffe abstützt und wobei die Spanneinrichtung eine auf das zweite Rohr aufsetzbare bügelartige Halterung aufweist, die an entgegengesetzten Rohrseiten zugewandten Bereichen jeweils ein an einer Drehachse gelagertes, mit einer Zugstange der Zieheinrichtung gelenkig verbundenes Spannelement mit einer dem jeweils anderen Spannelement zugewandten bogenförmigen Spannfläche trägt.

Zum Verlegen von Rohrleitungsnetzen werden üblicherweise einzelne Rohre bestimmter Länge und Form aneinander angesetzt. Dabei haben sich insbesondere sogenannte Muffenverbindungen als schnell herstellbar und besonders zuverlässig erwiesen, indem man das eine Rohrende, das den Nenndurchmesser aufweist, in das andere, mit einer im Durchmesser größeren Muffe versehene Ende des benachbarten Rohres einsteckt. Um eine dichte und elastische Rohrverbindung zu erhalten, wird zwischen die ineinandergesteckten Rohrenden eine Dichtung zwischengelegt, die üblicherweise als Ringdichtung ausgebildet und in einer Nut am Innenumfang der Muffe gehalten ist. Insbesondere wegen dieser Dichtung benötigt man zum Zusammenstecken der Rohre einen beträchtlichen Kraftaufwand. Hinzu kommt das regelmäßig große Gewicht der Rohre, die üblicherweise aus Guß- oder Stahlmaterial bestehen. Das Verlegen der Rohre von Hand ist deshalb beschwerlich und zeitaufwendig.

Um die Rohrverlegung zu vereinfachen, könnte man eine aus der US-PS 3 688 378 bekannte Vorrichtung verwenden. In diesem Falle wird die Spanneinrichtung einfach von einer Kette gebildet, die um das zweite Rohr gelegt wird und am Ende einen Haken besitzt, der nach Umrunden des Rohres zur Bildung einer Schlaufe an der Kette eingehängt wird. Zieht man am anderen Kettenende mittels der Zieheinrichtung, zieht sich zunächst die Kettenschlaufe fest, wonach das zweite Rohr zum ersten Rohr hin gezogen wird.

Die Kette kann beim Betätigen der von einem Hebel gebildeten Zieheinrichtung am zweiten Rohr zumindest anfänglich entlangrutschen, so daß der Schwenkring des Hebels für ein vollständiges Zusammenstecken der Rohre nicht ausreicht, und somit sozusagen nochmals nachgefaßt werden muß. Ferner beschädigt die Kette nicht nur wenn sie am Rohr verrutscht, sondern auch im festsitzenden Zustand das Rohr, da die Kettenglieder punktuell mit großer Kraft gegen die Rohraussenseite drücken. Derartige Rohre weisen sehr häufig eine Beschichtung beispielsweise aus Zement oder Teer auf, die auf diese Weise verletzt werden kann. Auch der endseitige Kettenhaken stellt diesbezüglich eine Gefahrenquelle dar. Des weiteren reibt die Kette beim Zusammenstecken der Rohre an der Muffe des ersten Rohres, da sie an dieser aufliegt. Bei diesem Entlanggleiten und da die einzelnen Kettenglieder sozusagen Quervorsprünge bilden, kann es zu Materialaussprengungen an der Muffe kommen.

Die Kette übt nicht eine reine Axialkraft aus, sondern zieht dem Kettenverlauf entsprechend schräg am Rohr, wobei die Angriffsstelle am Rohr von der Rohrmantelstelle gebildet wird, an der der Haken die Kettenschlaufe schließt, so daß beim Zusammenstecken der Rohre Verkantungen unvermeidlich sind. Auch in der horizontalen, d. h. in der rechtwinkelig zu der von der Kette und der Rohrachse aufgespannten Ebene stehenden Ebene ist die Anordnung sehr labil, da die Kette ja ein forminstabiles Zugelement bildet. Die Kette übt somit keine Ausrichtfunktion aus, so daß das zweite Rohr bis zum Ende der Verlegearbeit in der gewünschten Richtung gehalten werden muß.

Schließlich ist noch das Anbringen der Kette am zweiten Rohr umständlich, da dieses ja auf dem Erdboden liegt, so daß das Kettenende zwischen Rohr und Erdboden hindurchgezwängt werden muß.

Demgegenüber vorteilhaft ist eine aus der US-PS 3 571 896 bekannte Vorrichtung der eingangs genannten Art, bei der die Spanneinrichtung nicht von einer Kette gebildet wird sondern eine auf das zweite Rohr aufsetzbare bügelartige Halterung aufweist, die an entgegengesetzten Rohrseiten zugewandten Bereichen jeweils ein an einer Drehachse gelagertes, mit einer Zugstange der Zieheinrichtung gelenkig verbundenes Spannelement mit einer dem jeweils anderen Spannelement zugewandten Spannfläche trägt. Dabei sind die Spannelemente jeweils am freien Ende eines an der bügelartigen Halterung gelagerten zweiarmigen Hebels angeordnet, dessen anderes Ende an der zugehörigen Zugstange angelenkt ist. Die beiden Spannelemente weisen eine in Rohrlängsrichtung ebene und in Rohrumfangsrichtung bogenförmige, gezahnte Spannfläche auf, die unmittelbar am zweiten Rohr angreift. In ihrer unwirksamen Stellung sind die Spannelemente vom zweiten Rohr weggeschwenkt. Zieht man an den Zugstangen, schwenken die Spannelemente entlang einer Kreisbahn auf das Rohr zu. Dies führt zu einem Verkanten der Spannelemente am Rohr, bevor die Spannelemente ihre wirksame Stellung einnehmen. Dieses Verkanten ließe sich durch eine Verkürzung des das jeweilige Spannelement tragenden Hebelarms vermeiden. Das Spannelement würde dann jedoch nicht satt an der Rohraussenseite anliegen. Auch können die eine Längsbewegung dem Rohr entlang ausführenden Spannelemente die Aussenseite des Rohres beschädigen. Eine weitere Beschädigungsgefahr ergibt sich durch die Zähne der Spannflächen, die an der Rohraussenseite Eindrückungen hinterlassen können.

Der vorliegenden Erfindung liegt deshalb die Aufgabe zugrunde, eine Vorrichtung der eingangs genannten und aus der US-PS 3 571 896 hervorgehenden Art zu schaffen, mit der man das zweite Rohr ohne Beschädigungsgefahr verkantungsfrei zuverlässig fassen kann.

Diese Aufgabe wird erfindungsgemäß dadurch gelöst, daß die Spannfläche parallelachsig zur Drehachse bogenförmig verläuft und daß jedem Spannelement ein an der Halterung in Spannrichtung verschiebbar geführtes Kraftübertragungsglied mit einem dem Spannelement zum Rohr hin vorgelagerten Spannbacken zugeordnet ist, das die Spannkraft des Spannelements flächig auf das Rohr überträgt.

Wie im Falle der US-PS 3 571 896 wird bei der erfindungsgemäßen Vorrichtung die Spanneinrichtung einfach von oben her auf das zweite Rohr aufgesetzt, was gleichzeitig mit dem Aufsetzen der Abstützeinrichtung auf das erste Rohr erfolgt, wonach man mittels der Zugstangen die Spannelemente spannt und anschließend die Rohre aufeinander zu zieht. Dabei wirken bei der erfindungsgemäßen Vorrichtung die Spannelemente nicht unmittelbar sondern über die Spannbacken am Rohr, wobei sich die Spannbacken wegen der exzentrischen Bogenform der Spannelemente nur radial verlagern. Auf diese Weise treten an der Rohraussenseite keine Verkantungen und Reibungskräfte auf. Ausserdem sind am Rohr keine Punktkräfte sondern Flächenkräfte wirksam. Somit wird eine Beschädigung des Rohres mit Sicherheit vermieden. Des weiteren kann wegen der flächigen Verteilung der Spannkraft diese so groß gewählt werden, daß die Spannbacken nicht am Rohr entlangrutschen können. Die erforderliche Spannkraft läßt sich ohne weiteres durch eine entsprechende Exzentrizität und einen entsprechenden Bogenverlauf der Spannfläche erreichen.

Aus der DE-OS 32 45 674 geht eine Vorrichtung zum Ausrichten und Zusammenfügen von Rohren hervor, die jedoch keine Muffe besitzen und von denen das erste Rohr durch einen Greifbügel als Abstützeinrichtung ergriffen wird. Aus dieser Druckschrift ist es an sich bekannt, bei den von Zugstangen betätigten Spannelementen die Spannfläche exzentrisch bogenförmig verlaufen zu lassen. Ähnliches ergibt sich auch aus der CH-PS 505 333, bei der die mit einer exzentrisch bogenförmigen Spannfläche ausgestatteten Spannelemente mittels eines Zugseils betätigt werden. In beiden Fällen greifen die Spannelemente jedoch unmittelbar am Rohr an, so daß eine Reibung zwischen den Spannelementen und dem Rohr stattfindet und das Rohr nur punktförmig gehalten wird. Letzteres läßt bei großer Spannkraft sogar ein Eindrücken des Rohres befürchten. Im Falle der DE-OS 32 45 674 bringt die gezahnte Spannflächenausbildung eine weitere Beschädigungsgefahr des Rohres mit sich. Sind die Spannflächen wie bei der Vorrichtung gemäß der CH-PS 505 333 dagegen glatt ausgebildet, können die Spannelemente beim Zusammenziehen der Rohre am zweiten Rohr verrutschen. All dies wird bei der erfindungsgemäßen Vorrichtung durch die Spannbackenanordnung vermieden.

Eine mit wenig Fertigungsaufwand verbundene und stabile Führung für das Kraftübertragungsglied erhält man zweckmäßigerweise dadurch, daß das Kraftübertragungsglied rechtwinkelig vom Spannbacken nach außen abstehende, das Spannelement übergreifende Führungswände aufweist, die in einer rahmenförmigen Aufnahme der Halterung geführt sind, wobei das Spannelement einen vor die Aufnahme vorragenden Spannhebel besitzt, mit dem die Zieheinrichtung verbunden ist.

Ferner ist es zweckmäßig, daß das Kraftübertragungsglied die Gestalt eines an der dem Spannbacken entgegengesetzten Außenseite offenen quaderförmigen Behälters aufweist, dessen Boden den Spannbacken und dessen Wände die Führungswände bilden. Ein solches Kraftübertragungsglied ist an der Seite rundum geschlossen, so daß das jeweilige Spannelement geschützt untergebracht ist. Vor allem wird das Eintreten von Schmutz vermieden.

Vorteilhaft ist es des weiteren, daß die Halterung von zwei zweckmäßigerweise aus Flachmaterial gefertigten und mit Abstand zueinander angeordneten Bügeln gebildet wird, die im Bereich jedes Kraftübertragungsgliedes über zwei Querleisten miteinander verbunden sind, die zusammen mit den zwischen ihnen verlaufenden Bügelbereichen die rahmenförmige Aufnahme für das jeweilige Kraftübertragungsglied bilden. Die so ausgebildete Halterung ist nicht nur billig zu fertigen, sondern auch leichtgewichtig, was einen erheblichen Vorzug darstellt, da die Vorrichtung ja von Hand zu der jeweiligen Rohrverbindungsstelle getragen wird. Dabei erhält man gleichzeitig die Aufnahme für das jeweilige Kraftübertragungsglied.

Eine weitere zweckmäßige Maßnahme besteht darin, daß die rechtwinkelig zur Drehachse stehenden Führungswände des Kraftübertragungsgliedes in Spannrichtung verlaufende Langlöcher aufweisen, durch die die Drehachse des Spannelementes greift, die zweckmäßigerweise an den Querleisten der Halterung festgelegt ist. Auf diese Weise erhält man eine Doppelfunktion der Drehachse des jeweiligen Spannelementes, die gleichzeitig das Kraftübertragungsglied unverlierbar hält.

Eine erhöhte Reibungskraft und einen noch weiter verbesserten Schutz für die Rohraußenseite erhält man dadurch, daß der Spannbacken an seiner dem Rohr zugewandten Seite mit einem rutschfesten Belag z. B. aus Kunststoff oder Gummi versehen ist.

Ein Ausführungsbeispiel der Erfindung wird nun anhand der Zeichnung beschrieben. Es zeigen :

Fig. 1 eine erfindungsgemäße Vorrichtung in Seitenansicht, teilweise geschnitten, im Anwendungsfall,

Fig. 2 die Vorrichtung gemäß Fig. 1 in Vorderansicht gemäß Pfeil II in Fig. 1 und

Fig. 3 eine Einzelheit der Spannvorrichtung in vergrößerter Darstellung im Schnitt gemäß der Schnittlinie III-III in Fig. 1.

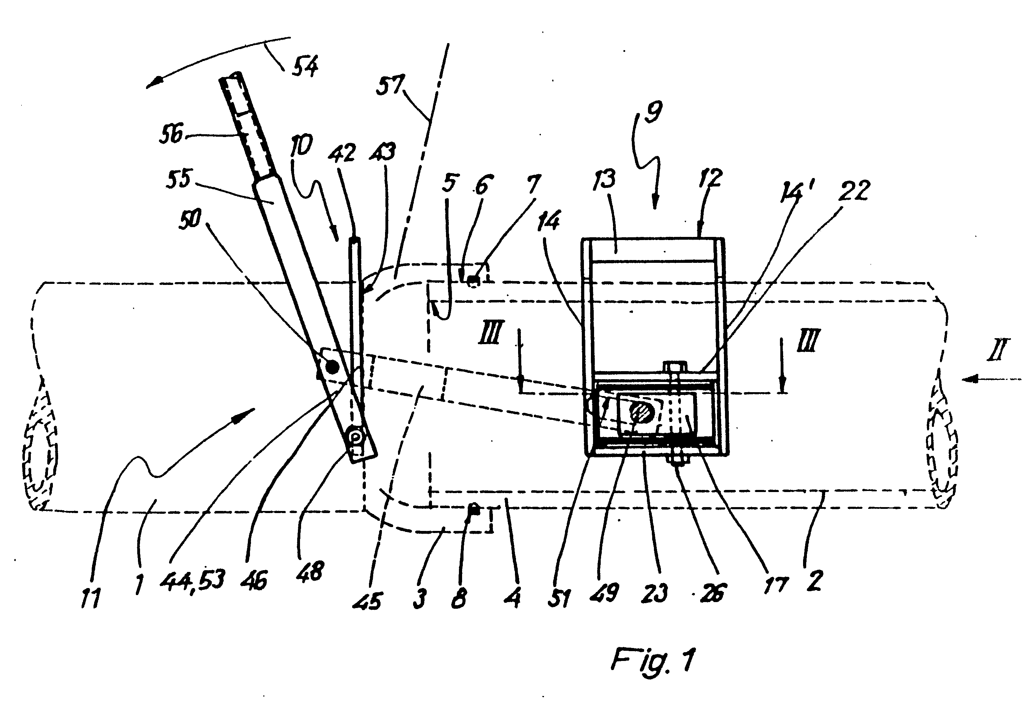

In Fig. 1 sind die Endbereiche von zwei ineinandergesteckten Rohren gestrichelt angedeutet. Der Endbereich des ersten Rohres 1 ist aufgeweitet und als Muffe 3 ausgebildet, deren Außendurchmesser größer als der des übrigen Rohres ist. Das zweite Rohr 2 ist mit seinem muffenlosen Endbereich 4, der gleichen Nenn-Außendurchmesser wie das erste Rohr 1 in seinem nicht aufgeweiteten Bereich aufweist, in die Muffe 3 mit Steckspiel eingesteckt. In eine umlaufende Nut 8 am Innenumfang 5 der Muffe 3 ist eine gegen den Außenumfang 6 des Endbereichs 4 des zweiten Rohres 2 dichtende Ringdichtung 7 eingesetzt.

Zum Zusammenstecken der Rohre wird eine Vorrichtung verwendet, die im wesentlichen aus einer Spanneinrichtung 9 zum lösbaren Halten des zweiten Rohres 2, einer am ersten Rohr 1 unter Hintergreifen der Muffe 3 aufsetzbaren Abstützeinrichtung 10 sowie aus einer Zieheinrichtung 11 besteht. Die Spanneinrichtung 9 und die Abstützeinrichtung 10 sind über die Zieheinrichtung 11 miteinander verbunden und können mit deren Hilfe bei gleichzeitigem Ineinanderschieben der Rohrenden aufeinander zu bewegt werden.

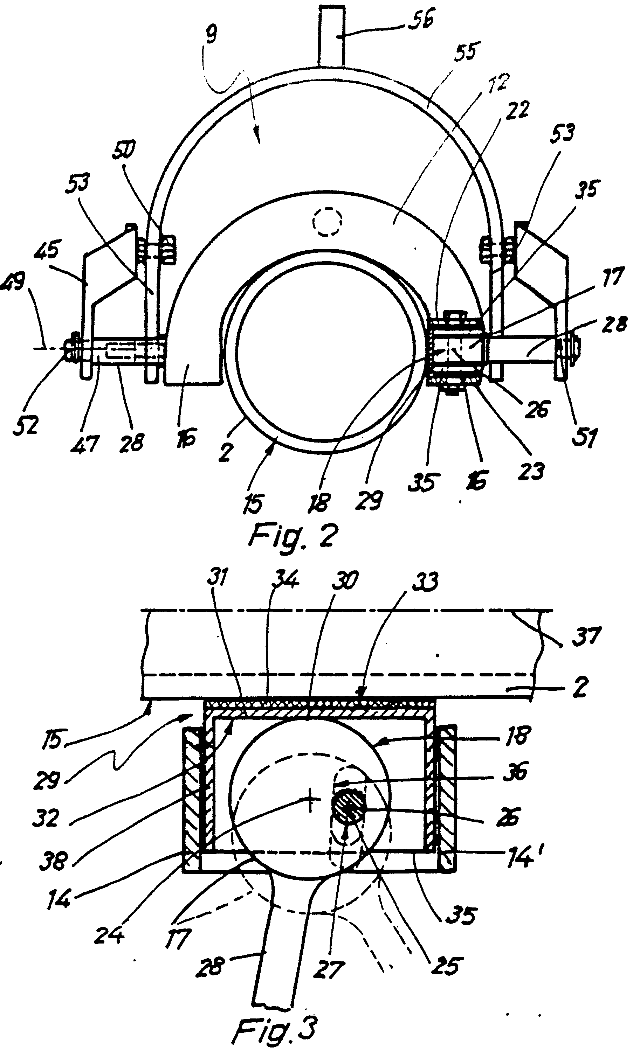

Die Spanneinrichtung 9 besitzt eine bügelförmig ausgebildete Halterung 12, die zwei parallel verlaufende und durch eine Abstandsstrebe 13 miteinander verbundene Bügel 14, 14' aufweist. Diese sind in etwa halbkreisförmig konturiert und zweckmäßigerweise aus hochkant stehendem Flachmaterial hergestellt. In Vorderansicht (Fig. 2) ergibt sich für die Halterung 12 die Gestalt einer diametral abgetrennten Ringhälfte. Die der Außenoberfläche 15 des zu spannenden zweiten Rohres 2 zugewandte Innenkontur der Halterung 12 ist auf die Außenkontur des zweiten Rohres 2 abgestimmt, so daß die Halterung 12 unter geringem Spiel mit ihrer offenen Seite auf das zweite Rohr 2 aufsetzbar ist. An den beiden freien Endbereichen 16 der bügelförmigen Halterung 12 ist jeweils ein Spannelement 17 angeordnet. Die beiden Spannelemente 17 liegen sich mit Bezug auf das zweite Rohr 2 vorzugsweise diametral gegenüber und sind der Rohr-Außenoberfläche 15 auf halber Rohrhöhe benachbart.

Das zweite Rohr 2 ist mit Hilfe der Spanneinrichtung 9 und hierbei insbesondere mittels der beiden Spannelemente 17 an seinem Außenumfang spannbar. Jedes Spannelement 17 ist zylinderförmig ausgebildet, wobei die Mantelfläche eine gegen den Außenumfang des Rohres 2 arbeitende Spannfläche 18 mit bogenförmiger Kontur bildet. Anstelle einer zylindrischen Gestalt kann das Spannelement 17 auch eine beliebig gestaltete Grundform mit angeformter bogenförmiger Spannfläche aufweisen.

Die beiden Bügel 14, 14' der Halterung 12 sind an ihrem freien Ende jeweils über eine untere Querleiste 23 und darüber mit Abstand zur unteren Querleiste über eine obere Querleiste 22 miteinander verbunden. Die Querleisten 22, 23 verlaufen parallel zueinander in Axialrichtung des Rohres. Auf diese Weise ergibt sich in der Seitenansicht (Fig. 1) eine rahmenförmige Aufnahme, innerhalb der das jeweilige Spannelement 17 angeordnet ist. Dabei liegen die beiden Stirnflächen des Spannelementes 17 den Querleisten 22, 23 gegenüber.

Jedes Spannelement 17 ist mit Bezug auf das Zentrum 24 seiner bogenförmigen Spannfläche 18 an einer beispielsweise von einer Schraube 26 gebildeten Drehachse 25 exzentrisch gelagert, die parallel und im Abstand zur Zentrumsachse 24 verläuft. Die Schraube 26 verbindet die beiden Querleisten 22, 23 miteinander und durchgreift eine Durchgangsbohrung 27 des Spannelementes 17. Infolge der exzentrischen Lagerung des Spannelementes 17 ist der Abstand zwischen seiner Spannfläche 18 und der Außenoberfläche 15 des Rohres 2 durch Verdrehen des Spannelementes 17 veränderbar.

In Fig. 3 ist das Spannelement 17 in zwei Drehstellungen dargestellt. Verdreht man das Spannelement 17 aus der gestrichelt dargestellten Stellung im Uhrzeigersinn, nähert sich die Spannfläche 18 an das Rohr 2 an und gelangt in die mit ausgezogener Linienführung dargestellte Stellung. Beim Verdrehen des Spannelementes 17 entgegen dem Uhrzeigersinn entfernt sich das Spannelement vom Rohr 2. Das Verdrehen des Spannelementes 17 erfolgt mittels eines Spannhebels 28, der an den Umfang des Spannelementes angesetzt oder angeformt ist und in etwa radial von diesem absteht.

Zwischen dem Spannelement 17 und dem Rohr 2 ist ein leistenförmiger, ebener oder aber gewölbter und in seiner Kontur der Außenkontur des Rohres 2 angepaßter Spannbacken 31 eines Kraftübertragungsgliedes 29 angeordnet, das in quer zur Axialrichtung des Rohres 2 gerichteter Spannrichtung verschiebbar geführt ist. Der Spannbacken 31 überträgt die im wesentlichen punktuelle Druckkraft (bei 30) des Spannelementes 17 flächig auf die Außenoberfläche 15 des Rohres 2. Dies ergibt eine größere Spannsicherheit. Außerdem wird eine Beschädigung des Rohres 2 vermieden.

Der Spannbacken 31 besitzt eine der Spannfläche 18 des Spannelementes 17 zugewandte Druckfläche 32 sowie eine dem zu spannenden Rohr 2 zugewandte Kraftübertragungsfläche 33. Erfolgt eine im Uhrzeigersinn gerichtete Verdrehung des in Fig. 3 dargestellten Spannelementes 17, drückt die Spannfläche 18 auf die Druckfläche 32, so daß die Kraftübertragungsfläche 33 gegen die Rohroberfläche 15 gedrückt wird. Dabei ist noch vorgesehen, daß der Spannbacken 31 an der dem Rohr 2 zugewandten Seite mit einem die Kraftübertragungsfläche 33 bildenden rutschfesten Belag 34 überzogen ist, der vorzugsweise aus einem einen hohen Reibungskoeffizienten aufweisenden Kunststoff- oder Gummimaterial od. dgl. besteht. Der Belag 34 verhindert beim Zusammenziehen der beiden Rohre 1, 2 ein Abrutschen der Spanneinrichtung 9 und schließt eine Beschädigung des Rohres 2 aus.

Die in Längsrichtung der Drehachse 25 bzw. der Schraube 26 gemessene Höhe des Kraftübertragungsgliedes 29 entspricht in etwa dem lichten Abstand der beiden Querleisten 22, 23 zusätzlich eines Verschiebespiels, so daß das Kraftübertragungsglied 29 ohne Probleme zwischen die beiden Querleisten 22, 23 eintauchen kann. An die beiden den Querleisten 22, 23 zugewandten Längskanten des Spannbackens 31 ist jeweils eine plattenförmige Führungswand 35 angeformt. Die beiden Führungswände 35 stehen rechtwinkelig vom Spannbacken 31 in gleicher Richtung ab und sind parallel zueinander, so daß sich ein Uförmiger Querschnitt des Kraftübertragungsgliedes 29 ergibt. Die beiden Führungswände 35 ragen in den Zwischenraum zwischen den beiden Querleisten 22, 23, verlaufen parallel zu diesen und sind der jeweils zugewandten Querleiste unter Verschiebespiel benachbart. Das Kraftübertragungsglied 29 ist somit in Radialrichtung des Rohres 2 verschiebbar. Die beiden Führungswände 35 flankieren das Spannelement 17 an seinen Stirnflächen, während die Spannfläche 18 des Spannelementes 17 der Druckfläche 32 gegenüberliegt. Die beiden Führungswände 35 übergreifen das Spannelement 17 mit Verschiebespiel.

Die von der Schraube 26 gebildete Drehachse 25 durchquert die beiden Führungswände 35, die hierzu Durchbrechungen in Art von Langlöchern 36 aufweisen, deren Längsrichtung rechtwinkelig zur Rohrlängsachse 37 verläuft.

Die in Richtung der Rohrlängsachse 37 gemessene Länge des Spannbackens 31 ist auf den Abstand der beiden Bügel 14, 14' abgestimmt, so daß unter Verschiebespiel ein Eintauchen zwischen die beiden Bügel 14, 14' möglich ist. Um auch eine seitliche Führung für das Kraftübertragungsglied 29 zu erhalten, können an den Spannbacken 31 noch seitliche, den Bügeln 14, 14' benachbarte weitere Führungswände 38 angeformt sein, so daß das Kraftübertragungsglied 29 etwa die Form eines an einer Seite offenen, quaderförmigen Behälters erhält.

Die Spanneinrichtung 9 ist symmetrisch ausgeführt. An beiden freien Endbereichen 16 der Halterung 12 ist je ein Spannelement 17 und ein Kraftübertragungsglied 29 wie oben beschrieben angebracht.

Die Funktionsweise der Spanneinrichtung 9 ist wie folgt :

Zum Aufsetzen der Spanneinrichtung 9 auf das Rohr 2 werden die beiden Spannelemente 17 so gedreht (gestrichelte Stellung in Fig. 3), daß die beiden Kraftübertragungglieder 29 in Richtung voneinander weg verschoben werden können. Das Verschieben wird durch die Langlöcher 36 gewährleistet. Die Kraftübertragungsglieder 29 werden so weit zwischen die Bügel 14, 14' hineingeschoben, bis der lichte Abstand der beiden Spannbacken 31 etwa dem Außendurchmesser des Rohres 2 entspricht und die Spanneinrichtung 9 aufgesetzt werden kann. Das Zurückschieben der Kraftübertragungsglieder 29 erfolgt beim Aufsetzen der Spanneinrichtung 9 zweckmäßigerweise selbsttätig. Sodann verdreht man die beiden Spannglieder 17 in die in Fig. 3 mit ausgezogenen Linien dargestellte Stellung, wodurch die Spannbacken 31 wegen der exzentrischen Spanngliedlagerung gegen das Rohr 2 gespannt werden.

Die aus Fig. 1 hervorgehende, auf das erste Rohr 1 aufgesetzte Abstützeinrichtung 10 ist als Abstützbügel 42 ausgebildet, dessen Gestalt vorzugsweise der der Bügel 14, 14' entspricht. Der Abstützbügel 42 weist eine dem ersten Rohr 1 zugewandte, kreisbogenförmige Innenkontur mit einem in etwa der Krümmung des Rohres im Nennquerschnitt entsprechenden Innenradius auf. Der Innenradius des Abstützbügels 42 ist also kleiner als der Krümmungsradius der Manteloberfläche der Muffe 3, so daß diese zur Spanneinrichtung 9 hin einen axialen Anschlag für den Abstützbügel 42 bildet. Dabei hintergreift der Abstützbügel 42 die Muffe 3 in etwa über die Hälfte ihres Umfangs. Die Anlage- bzw. Abstützbereiche zwischen Abstützbügel 42 und Muffe 3 befinden sich bei 43 am Muffenansatz.

Die Zieheinrichtung 11 enthält an beiden Seiten der Vorrichtung eine identische Zugstangenanordnung. Die beiden Zugstangenanordnungen liegen sich im an die beiden Rohre 1, 2 angesetzten Zustand in etwa diametral gegenüber. Jede Zugstangenanordnung enthält zwei Zugstangen 44, 45, von denen in Fig. 1 die Zugstange 45 gestrichelt dargestellt ist. Die erste Zugstange 44 ist in etwa auf Höhe des halben Rohrdurchmessers mit dem Endbereich des zugewandten Abstützbügelschenkels 46 gelenkig und schwenkbar verbunden. Diese Schwenkachse 48 verläuft quer zur Axialrichtung der Rohre. Die zweite Zugstange 45 ist am freien, dem Spannelement 17 entgegengesetzten Ende 47 des jeweiligen Spannhebels 28 angelenkt (s. auch Fig. 2). Auch hier verläuft die Drehachse 49 in etwa quer zur Rohrlängsrichtung. Weiterhin sind die beiden Zugstangen 44, 45 an einer gemeinsamen Drehachse 50 aneinander angelenkt. Die drei Drehachsen 48, 49, 50 bilden ein Gelenkdreieck. Da die erste Zugstange 44 unmittelbar am Abstützbügel 42 gelagert ist und der Spannhebel 28 eine gewisse Länge aufweist, ist die zweite Zugstange 45 gemäß Fig. 2 abgekröpft.

Die Lagerung der zweiten Zugstange 45 am Spannhebel 28 erfolgt derart, daß ein Schwenken der zweiten Zugstange 45 nicht nur in einer zur Drehachse 49 rechtwinkeligen, sondern auch in einer hierzu geneigten Ebene möglich ist. Hierzu sitzt die zweite Zugstange 45 mit axialem Spiel an ihrer Drehachse 49. Die zweite Zugstange 45 kann eine Aufnahmeöffnung 51 besitzen, mit der sie auf einen Lagerfortsatz 52 des Spannhebels 28 aufschiebbar ist, auf dem sie mit geeigneten Mitteln, z. B. Scheibe und Splint, festlegbar ist. Die erste Zugstange 44 bildet einen Schwenkhebel 53, der bei seinem Verschwenken in Richtung gemäß Pfeil 54 in Fig. 1 über die angelenkte zweite Zugstange 45 und den damit verbundenen Spannhebel 28 ein Verdrehen des Spannelementes 17 um die Achse 25 bewirkt.

Zur Vereinfachung der Bedienung und um ein gleichmäßiges Spannen des zweiten Rohres 2 zu erreichen, sind die Schwenkhebel 53 der beiden Zugstangenanordnungen fest miteinander verbunden und bilden zusammen einen bügelförmigen Schwenkarm 55, der im wesentlichen koaxial zum Abstützbügel 42 angeordnet ist. Der radiale Abstand zwischen der Außenoberfläche der Rohre und dem bügelförmigen Schwenkarm 55 ist so gewählt, daß der Schwenkarm 55 in und entgegen der Richtung gemäß Pfeil 54, das heißt in Rohrlängsrichtung, störungsfrei verschwenkt werden kann. Am Schwenkarm 55 kann ein Stutzen 56 angebracht sein, an den zur leichteren Betätigung der Vorrichtung eine Verlängerung beispielsweise in Gestalt eines Verlängerungsrohres angesetzt werden kann.

Die Vorrichtung funktioniert insgesamt wie folgt :

Hat man die beiden Rohre 1, 2 aneinander angesetzt, wird die Vorrichtung aufgesetzt, so daß der Abstützbügel 42 an der Muffe 3 anliegt. Der Abstützbügel 42 kann sich dann auf dem ersten Rohr 1 nicht mehr verschieben. Ferner werden die beiden Spannelemente 17 wie oben beschrieben in die das Aufsetzen der Spanneinrichtung 9 auf das zweite Rohr 2 ermöglichende Stellung (in Fig. 3 gestrichelt dargestellt) gebracht. Verschwenkt man sodann den Schwenkarm 55 in Richtung gemäß Pfeil 54, nehmen die beiden von diesem gebildeten ersten Zugstangen 44 die beiden zweiten Zugstangen 45 mit, so daß sich die beiden Spannelemente 17 — das in Fig. 3 dargestellte Spannelement im Uhrzeigersinn — verdrehen und das Rohr 2 in der Spanneinrichtung 9 festgehalten wird. Zur Durchführung dieser Bewegung ist das oben erwähnte Lagerspiel bei 49 erforderlich. Wird der Schwenkarm 55 anschließend noch weiter in Richtung gemäß Pfeil 54 verschwenkt, wird über die Zugstangenanordnungen 44, 45 eine zur Abstützeinrichtung 10 hin gerichtete Zugkraft auf die Spanneinrichtung 9 ausgeübt. Dabei nimmt die Spanneinrichtung 9 das von ihr festgehaltene Rohr 2 mit, das in die Muffe 3 des Rohres 1 hineingezogen wird. Durch eine einzige Arbeitsbewegung wird also das zweite Rohr 2 zuerst in der Spanneinrichtung 9 gespannt und anschließend in Axialrichtung bewegt.

Durch eine geeignete Wahl der Länge des Schwenkarms 55 und der Zugstangen 44, 45 sowie der Stellung der Drehachse 50 können die einzelnen Bewegungsabläufe der Vorrichtung optimiert werden. Je näher die Drehachse 50 zur Drehachse 48 verlagert wird, desto niedriger ist der Kraftaufwand zum Betätigen des Schwenkarms 55. Es ergibt sich also eine Hebelübersetzung, die den Kraftaufwand zum Zusammenstecken der beiden Rohre 1, 2 beträchtlich reduziert. Die beiden Drehachsen 48, 49 kann man so anordnen, daß sie in etwa auf der Höhe des Mittelpunktes des Rohrdurchmessers liegen. Dadurch erfolgt eine gleichmäßige Krafteinleitung auf das Rohr 2, das sich gegenüber der Muffe 3 nicht verkanten kann.

Die beschriebene Vorrichtung läßt sich auch zum Auseinanderziehen von zwei ineinandergesteckten Rohren verwenden, ohne daß hierzu Umbauarbeiten erforderlich wären. Zu diesem Zwecke braucht man nur die Abstützeinrichtung 10 auf die bezüglich der Spanneinrichtung 9 entgegengesetzte Seite verlagern, was durch eine 180°-Schwenkbewegung der Abstützeinrichtung 10 und der Zieheinrichtung 11 um die Drehachse 49 erfolgt. Anschließend wird die Vorrichtung auf das eingesteckte Rohr 1 aufgesetzt, wobei die Abstützeinrichtung 10 an der freien Stirnfläche der Muffe 3 des ersten Rohres 1 angelegt wird. Durch Betätigung des Schwenkarms 55 erfolgt zunächst wieder ein Spannen des Rohres 2 und anschließend ein Voneinanderwegbewegen der Abstützeinrichtung 10 und der Spanneinrichtung 9, wobei gleichzeitig das gespannte Rohr 2 aus der Muffe 3 herausgezogen wird. Das Verschwenken der Abstützeinrichtung 10 und der Zieheinrichtung 11 ist erforderlich, um die exzentrisch gelagerten Schwenkelemente im richtigen Drehsinn zu beaufschlagen.

Damit die Vorrichtung auch bei engen Rohrbiegungen aufgesetzt werden kann, ist die Aufnahmeöffnung 51 in der zweiten Zugstange 45 als Langloch ausgebildet, so daß sich der Spannhebelfortsatz 52 beim Zusammenstecken zweier Rohre am äußeren Ende und beim Auseinanderziehen zweier Rohre am entgegengesetzten, in Richtung der Drehachse 50 weisenden Ende des Langloches abstützt.

Da die Vorrichtung einfach auf die Rohre 1, 2 aufgesetzt wird und diese nur in etwa zu Hälfte bügelförmig umgreift, sind keine unter den Rohren hindurchzufädelnden Teile vorhanden.

**Patentansprüche**

1. Vorrichtung zum Zusammenstecken zweier Rohre (1, 2), wobei das zu verbindende Ende des ersten Rohres (1) von einer im Durchmesser größeren Muffe (3) gebildet wird, in die das zugewandte Ende des zweiten Rohres (2) einsteckbar ist, mit einer auf das erste Rohr hinter der Muffe (3) aufsetzbaren Abstützeinrichtung (10), einer das zweite Rohr (2) von aussen her spannenden Spanneinrichtung (9) und mit einer an der Abstützeinrichtung (10) angeordneten sowie mit der Spanneinrichtung (9) in Eingriff stehenden Zieheinrichtung (11), bei deren Betätigung die Spanneinrichtung (9) das zweite Rohr (2) erfaßt und gegen das erste Rohr (1) zieht, wobei sich die Abstützeinrichtung (10) an der Muffe (3) abstützt und wobei die Spanneinrichtung (9) eine auf das zweite Rohr (2) aufsetzbare bügelartige Halterung (12) aufweist, die an entgegengesetzten Rohrseiten zugewandten Bereichen jeweils ein an einer Drehachse (26) gelagertes, mit einer Zugstange (45) der Zieheinrichtung (11) gelenkig verbundenes Spannelement (17) mit einer dem jeweils anderen Spannelement zugewandten, bogenförmigen Spannfläche (18) trägt, dadurch gekennzeichnet, daß die Spannfläche (18) parallelachsig zur Drehachse (26) bogenförmig verläuft und daß jedem Spannelement (17) ein an der Halterung (12) in Spannrichtung verschiebbar geführtes Kraftübertragungsglied (29) mit einem dem Spannelement (17) zum Rohr (2) hin vorgelagerten Spannbacken (31) zugeordnet ist, das die Spannkraft des Spannelements (17) flächig auf das Rohr (2) überträgt.

2. Vorrichtung nach Anspruch 1, dadurch gekennzeichnet, daß das Kraftübertragungsglied (29) rechtwinkelig vom Spannbacken (31) nach außen abstehende, das Spannelement (17) übergreifende Führungswände (35, 38) aufweist, die in einer rahmenförmigen Aufnahme der Halterung (12) geführt sind, wobei das Spannelement (17) einen vor die Aufnahme vorragenden Spannhebel (28) besitzt, mit dem die Zieheinrichtung (11) verbunden ist.

3. Vorrichtung nach Anspruch 2, dadurch gekennzeichnet, daß das Kraftübertragungsglied (29) die Gestalt eines an der dem Spannbacken (31) entgegengesetzten Außenseite offenen quaderförmigen Behälters aufweist, dessen Boden den Spannbacken (31) und dessen Wände die Führungswände (35, 38) bilden.

4. Vorrichtung nach Anspruch 2 oder 3, dadurch gekennzeichnet, daß die Halterung (12) von zwei zweckmäßigerweise aus Flachmaterialgefertigten und mit Abstand zueinander angeordneten Bügeln (14, 14') gebildet wird, die im Bereich jedes Kraftübertragungsgliedes (29) über zwei Querleisten (22, 23) miteinander verbunden sind, die zusammen mit den zwischen ihnen verlaufenden Bügelbereichen die rahmenförmige Aufnahme für das jeweilige Kraftübertragungsglied (29) bilden.

5. Vorrichtung nach einem der Ansprüche 2 bis 4, dadurch gekennzeichnet, daß die rechtwinkelig zur Drehachse (25) stehenden Führungswände (35) des Kraftübertragungsgliedes (29) in Spannrichtung verlaufende Langlöcher (36) aufweisen, durch die die Drehachse (26) des Spannelementes (17) greift, die zweckmäßigerweise an den Querleisten (22, 23) der Halterung (12) festgelegt ist.

6. Vorrichtung nach einem der Ansprüche 1 bis 5, dadurch gekennzeichnet, daß der Spannbacken (31) an seiner dem Rohr (2) zugewandten Seite (33) mit einem rutschfesten Belag (34) z. B. aus Kunststoff oder Gummi versehen ist.

**Claims**

1. A device for the connection of two pipes (1, 2), whereby the connecting end of the first pipe (1) has the form of a socket (3) of enlarged diameter into which the adjacent end of the second pipe (2) is inserted, with a supporting means (10) mountable on the first pipe behind the socket (10), with a clamping means (9) for externally clamping the second pipe (2), and with a pulling means (11) mounted on the supporting means (10) and engaging the clamping means (9), which, when operated, causes the clamping means (9) to grip the second pipe (2) and pull it towards the first pipe (1), the supporting means (10) being supported on the socket (3) and the clamping means (9) having a second U-shaped bracket (12) mountable on the second pipe (2), which bracket, in the areas facing opposing sides of the pipes, is provided with clamping elements (17) having curved clamping faces (18) each facing the other arranged on an axis of rotation (26) and pivoted on a tie rod (45) of the pulling means (11), characterised in that the clamping face (18) with its axis parallel to the axis of rotation (26) is curved, and in that each clamping element (17) is associated with a power transmission element (29) guided along the bracket (12) in the direction of clamping and having a jaw (31) located in front of the clamping element (17) relative to the pipe (2) for the planar transmission of the clamping force of the clamping element (17) to the pipe (2).

2. A device as claimed in Claim 1, characterised in that the power transmission element (29) has guide walls (35, 38) extending vertically from the clamping jaw (31) to overlap the clamping element (17), said guide walls being guided in a frame-like part of the bracket (12), the clamping element (17) being provided with a clamping lever (28) projecting in front of the frame-like part and being connected to the pulling means (11).

3. A device as claimed in Claim 2, characterised in that the power transmission element (29) has the shape of a cuboid box open on the outer side opposite the clamping jaw (31), the clamping jaw (31) being its base and the guide walls (35, 38) being its walls.

4. A device as claimed in Claim 2 or 3, characterised in that the bracket (12) is made up of two yokes (14, 14'), preferably made of flat stock and spaced from each other, which, in the area of each power transmission element (29), are linked by means of two crossbars (22, 23) forming, together with the yoke sections between them, the framelike mounting part for the power transmission element (29).

5. A device as claimed in any of Claims 2 to 4, characterised in that the guide walls (35) of the power transmission element (29) extending vertical to the axis of rotation (25) have slots (36) extending in the direction of clamping for the passage of the axis of rotation (26) of the clamping element (17), which is suitably located on the crossbars (22, 23) of the bracket (12).

6. A device as claimed in any of Claims 1 to 5, characterised in that the clamping jaw (31) is provided with a non-slip lining (34), e. g. of plastic or rubber, on the side (33) adjacent to the pipe (2).

**Revendications**

1. Dispositif pour emboîter l'un dans l'autre deux tuyaux (1, 2), l'extrémité à raccorder du premier tuyau (1) étant conformée en manchon (3) de diamètre plus grand, dans lequel peut être emmanchée l'extrémité du second tuyau (2) située en regard, avec des moyens d'appui (10) s'accrochant sur le premier tuyau derrière le manchon (3), avec des moyens de serrage (9) se serrant par l'extérieur sur le second tuyau (2), et avec des moyens de traction (11) associés aux moyens d'appui (10) et se trouvant aussi liés aux moyens de serrage (9), l'actionnement des moyens de traction (11) provoquant le serrage du second tuyau (2) par les moyens de serrage (9) et sa traction en direction du premier tuyau (1), les moyens d'appui (10) prenant alors appui sur le manchon (3) et les moyens de serrage (9) comportant un support (12) en forme d'étrier, se posant sur le second tuyau (2) qui porte, dans des régions tournées vers des côtés opposés du tuyau et de chaque côté, un élément de serrage (17) monté tournant sur un axe de pivotement (26), relié de manière articulée aux moyens de traction (11) par une tige de traction (45) et pourvu d'une surface de serrage (18) incurvée, tournée vers l'autre élément de serrage, caractérisé en ce que la surface de serrage (18) est incurvée selon un axe parallèle à l'axe de pivotement (26) et en ce qu'à chaque élément de serrage (17) est associé un organe de transmission de force (29) monté coulissant sur le support (12) dans la direction de serrage, avec une mâchoire de serrage (31) disposée en avant de l'élément de serrage (17) du côté du tuyau (2), laquelle transmet la force de serrage de l'élément de serrage (17), d'une manière répartie en surface, sur le tuyau (2).

2. Dispositif selon la revendication 1, caractérisé en ce que l'organe de transmission de force (29) comporte des parois de guidage (35, 38) faisant saillie à angle droit de la mâchoire de serrage (31) et recouvrant l'élément de serrage (17), ces parois étant elles-mêmes guidées dans un logement en forme de cadre du support (12), l'élément de serrage (17) possédant un levier de serrage (28) faisant saillie en avant de ce logement et auquel sont reliés les moyens de traction (11).

3. Dispositif selon la revendication 2, caractérisé en ce que l'organe de transmission de force (29) a la forme d'un réceptacle parallélépipédique, ouvert sur sa face opposée à la mâchoire de serrage (31), dont le fond forme la mâchoire de serrage (31) et dont les parois forment les parois de guidage (35, 38).

4. Dispositif selon la revendication 2 ou 3, caractérisé en ce que le support (12) est constitué par deux étriers (14, 14') avantageusement réalisés dans un matériau plat et situés à distance l'un de l'autre, qui sont reliés l'un à l'autre, dans la région de chaque organe de transmission de force (29), par deux traverses (22, 23) qui, avec les parties des étriers s'étendant entre ces traverses, délimitent le logement en forme de cadre pour l'organe de transmission (29) correspondant.

5. Dispositif selon l'une des revendications 2 à 4, caractérisé en ce que les parois de guidage (35) de l'organe de transmission de force (29), s'étendant perpendiculairement à l'axe de pivotement (26), présentent des trous oblongs (36) ménagés suivant la direction du serrage, au travers desquels passe l'axe de pivotement (26), lequel est avantageusement fixé aux traverses (22, 23) du support (12).

6. Dispositif selon l'une des revendications 1 à 5, caractérisé en ce que la mâchoire de serrage (31) est pourvue, sur sa face (33) tournée vers le tuyau (2), d'un revêtement antidérapant (34), par exemple en matière synthétique ou en caoutchouc.

Fig. 1

EP 0 196 489 B1

Fig. 2

Fig.3

2